# EUROPEAN PATENT APPLICATION

(11) **EP 4 693 828 A1**
(43) Date of publication of application: **11.02.2026**
(21) Application number: 24777709.7
(22) Date of filing: 12.03.2024
(51) Int. Cl.: H02K 1/16, H02K 3/12, H02K 3/28

(54) **VEHICLE, MOTOR, AND STATOR THEREOF**

(30) Priority: 31.03.2023 CN 202310363165
(71) Applicant: BYD Company Limited, Shenzhen, Guangdong 518118 (CN)
(72) Inventor: LU, Hao, Shenzhen, Guangdong 518118 (CN); YOU, Bin, Shenzhen, Guangdong 518118 (CN)
(74) Representative: Mathys & Squire
(86) International application number: PCT/CN2024/081210
(87) International publication number: WO 2024/198919

(57) **Abstract**

A vehicle, a motor, and a stator thereof are provided. The stator includes a core and a winding. The core is provided with a plurality of stator slots spaced apart in a circumferential direction. The winding includes at least two phase coils, each phase coil is wound around the core through the stator slot, and each phase coil defines a plurality of conductor layers in the stator slot. The plurality of stator slots include a plurality of first-type stator slots, the first-type stator slot includes a first threading area and a second threading area, the first threading area accommodates a plurality of conductor layers of a same phase, the second threading area accommodates a plurality of conductor layers of a same phase, the phase of the conductor layer accommodated in the first threading area is different from the phase of the conductor layer accommodated in the second threading area, and a quantity of conductor layers accommodated in the first threading area is different from a quantity of conductor layers accommodated in the second threading area.

## Description

### TECHNICAL FIELD

This application generally relates to the field of motor technologies, and more specifically to a vehicle, a motor, and a stator thereof.

### BACKGROUND

Currently, due to limitations of stator structure, the same quantity of conductors of different phases of a stator winding pass through the same stator slot, which is only applicable to a full-pitch motor. In particular, for a 3-slot permanent magnet motor, the 5^{th} and 7^{th} harmonics of the air gap magnetic field are not effectively suppressed, and the 5^{th} and 7^{th} harmonics cannot be effectively suppressed through short-pitch winding, resulting in unstable torque fluctuations in the motor.

### SUMMARY

A series of concepts in a simplified form are introduced in the summary, and is to be further described in detail in the description of embodiments. The summary of this application neither implies an attempt to define key features and essential technical features of the claimed technical solutions, nor implies an attempt to determine the protection scope of the claimed technical solutions.

To at least partially resolve the foregoing problem, a first aspect of this application provides a stator, including:
a core, wherein the core is provided with a plurality of stator slots spaced apart in a circumferential direction; and
a winding, wherein the winding includes at least two phase coils, each phase coil is wound around the core through the stator slot, and each phase coil defines a plurality of conductor layers in the stator slot, wherein
the plurality of stator slots include a plurality of first-type stator slots, the first-type stator slot includes a first threading area and a second threading area, the first threading area accommodates a plurality of conductor layers of a same phase, the second threading area accommodates a plurality of conductor layers of a same phase, the phase of the conductor layer accommodated in the first threading area is different from the phase of the conductor layer accommodated in the second threading area, and a quantity of conductor layers accommodated in the first threading area is different from a quantity of conductor layers accommodated in the second threading area.

Optionally, a quantity of conductor layers accommodated in a single stator slot is m>4, and a quantity of slots per pole per phase of the stator is q>2.

Optionally, the plurality of stator slots further include a plurality of second-type stator slots; and
a third threading area is formed in the second-type stator slot, a plurality of conductor layers in the second-type stator slot are all disposed in the third threading area, phases of the plurality of conductor layers in the second-type stator slot are consistent, and a plurality of first-type stator slots are disposed between adjacent second-type stator slots in the circumferential direction.

Optionally, the phase of the conductor layer accommodated in the first threading area of the first-type stator slot is consistent with a phase of the conductor layer in one of the adjacent second-type stator slots; and
the phase of the conductor layer accommodated in the second threading area of the first-type stator slot is consistent with a phase of the conductor layer in the other adjacent second-type stator slot.

Optionally, the quantity m of conductor layers accommodated in the single stator slot is one of 5, 6, 7, and 8, and the quantity of slots per pole per phase of the stator is q=3.

Optionally, the quantity m of conductor layers accommodated in the single stator slot is 5, the winding includes a phase-A coil, a phase-B coil, and a phase-C coil, and an arrangement of the winding per pole in the circumferential direction is BBAAA, BBBAA, BBBBB, CCBBB, CCCBB, CCCCC, AACCC, AAACC, and AAAAA.

Optionally, the quantity m of conductor layers accommodated in the single stator slot is 6, the winding includes a phase-A coil, a phase-B coil, and a phase-C coil, and an arrangement of the winding per pole in the circumferential direction is BBAAAA, BBBBAA, BBBBBB, CCBBBB, CCCCBB, CCCCCC, AACCCC, AAAACC, and AAAAAA.

Optionally, the quantity m of conductor layers accommodated in the single stator slot is 8, the winding includes a phase-A coil, a phase-B coil, and a phase-C coil, and an arrangement of the winding per pole in the circumferential direction is BBAAAAAA, BBBBBBAA, BBBBBBBB, CCBBBBBB, CCCCCCBB, CCCCCCCC, AACCCCCC, AAAAAACC, and AAAAAAAA.

Optionally, the quantity m of conductor layers accommodated in the single stator slot is 8, the winding includes a phase-A coil, a phase-B coil, and a phase-C coil, and an arrangement of the winding per pole in the circumferential direction is BBBAAAAA, BBBBBAAA, BBBBBBBB, CCCBBBBB, CCCCCBBB, CCCCCCCC, AAACCCCC, AAAAACCC, and AAAAAAAA.

Optionally, a quantity of conductor layers accommodated in a single stator slot is m≥3, and a quantity of slots per pole per phase of the stator is q≥2.

Optionally, the first-type stator slot is provided with a first insulation paper, and the first insulation paper defines the first threading area and the second threading area in the first-type stator slot.

Optionally, the first insulation paper is a B-type insulation paper or an S-type insulation paper.

Optionally, the second-type stator slot is also provided with the first insulation paper, the first insulation paper defines the third threading area in the second-type stator slot, and the third threading area includes the first threading area and the second threading area.

Optionally, the second-type stator slot is provided with a second insulation paper, and the second insulation paper defines the third threading area in the second-type stator slot.

Optionally, the second insulation paper is an O-type insulation paper.

A second aspect of this application provides a motor, including the stator according to the foregoing technical solution.

A third aspect of this application provides a vehicle, including the motor according to the foregoing technical solution.

### BRIEF DESCRIPTION OF DRAWINGS

The following accompanying drawings of the implementations of this application are used as a part of this application to understand this application. The accompanying drawings show the implementations and descriptions of this application, and are used to explain the principle of this application. In the accompanying drawings:
FIG. 1 is a view of a stator in an axis direction of the stator according to a preferred implementation of this application, where a quantity of conductor layers accommodated in a single stator slot of the stator is 5, and each stator slot is provided with a first insulation paper and a second insulation paper;
FIG. 2 is a schematic diagram of an arrangement of a winding per pole of the stator in FIG. 1;
FIG. 3 is a schematic diagram of an arrangement of a winding per pole of a stator according to another preferred implementation of this application, where each stator slot of the stator is provided with a first insulation paper;
FIG. 4 is a schematic diagram of an arrangement of a winding per pole of a stator according to still another preferred implementation of this application, where a quantity of conductor layers accommodated in a single stator slot of the stator is 6, and each stator slot is provided with a first insulation paper;
FIG. 5 is a schematic diagram of an arrangement of a winding per pole of a stator according to yet another preferred implementation of this application, where a quantity of conductor layers accommodated in a single stator slot of the stator is 8, and each stator slot is provided with a first insulation paper;
FIG. 6 is a schematic structural diagram of an S-type insulation paper;
FIG. 7 is a schematic structural diagram of a B-type insulation paper; and
FIG. 8 is a schematic structural diagram of an O-type insulation paper.

**Reference numerals**

| | | | |
|---|---|---|---|
| 100: | Stator | 110: | Core |
| 111: | Stator slot | 112: | First-type stator slot |
| 113: | Second-type stator slot | 114: | First threading area |
| 115: | Second threading area | 116: | Third threading area |
| 117: | One group of stator slots | 117A: | First group of stator slots |
| 117B: | Second group of stator slots | 117C: | Third group of stator slots |
| 120: | Winding | 121: | Coil |
| 127: | Conductor layer | 130: | First insulation paper |
| 131: | Second insulation paper | 132: | B-type insulation paper |
| 133: | S-type insulation paper | 134: | O-type insulation paper |
| X: | Circumferential direction | | |

### DESCRIPTION OF EMBODIMENTS

In the following description, a large quantity of specific details are provided to provide a more thorough understanding of this application. However, for a person skilled in the art, it is clear that implementations of this application can be implemented without one or more of these details. In another example, to avoid confusion with the implementations of this application, some technical features well-known in the art are not described.

In this specification, ordinal numbers such as "first" and "second" referenced in this application are merely identifiers, and do not have any other meaning, for example, a specific sequence. Moreover, for example, the term "first component" does not imply existence of "second component", and the term "second component" does not imply existence of "first component".

In this specification, "top", "bottom", "front", "back", "left", "right", and the like are used only to represent relative location relationships between related parts, rather than limiting absolute locations of these related parts.

In this specification, "equal", "same", and the like do not impose strict limitations in terms of mathematics and/or geometry, but also include an error that is allowed for manufacturing, use, or the like and that may be understood by a person skilled in the art.

Unless otherwise noted, a value range in this specification includes not only an entire range including two endpoints of the value range, but also includes several subranges included in the value range.

This application first provides a stator.

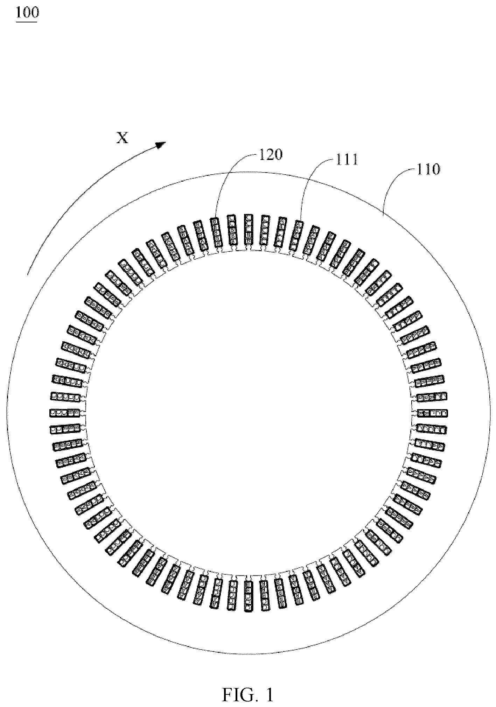

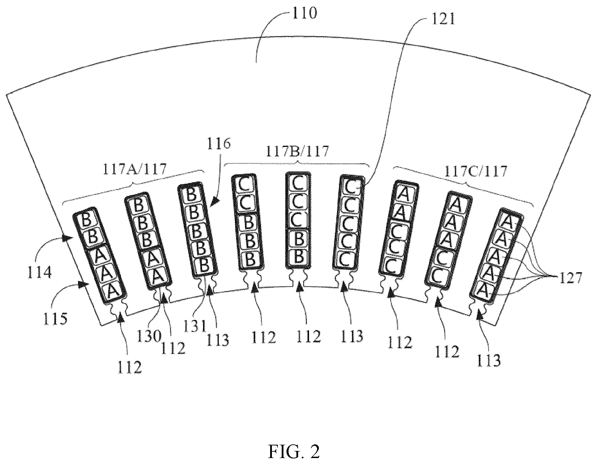

FIG. 1 and FIG. 2 show a stator 100 according to a specific implementation of this application. The stator 100 includes a core 110 and a winding 120. The core 110 is provided with a plurality of stator slots 111 spaced apart in a circumferential direction X. The winding 120 includes at least two phase coils 121, each phase coil 121 is wound around the core 110 through the stator slot 111, and each phase coil 121 defines a plurality of conductor layers 127 in the stator slot 111 (each coil 121 forms one conductor layer 127).

The stator slot 111 includes a first-type stator slot 112. The first-type stator slot 112 includes a first threading area 114 and a second threading area 115. The first threading area 114 accommodates a plurality of conductor layers 127 of a same phase (in other words, the phase of the conductor layer 127 is a phase of a coil 121 forming the conductor layer 127), the second threading area 115 accommodates a plurality of conductor layers 127 of a same phase, the phase of the conductor layer 127 accommodated in the first threading area 114 is different from the phase of the conductor layer 127 accommodated in the second threading area 115, and a quantity of conductor layers 127 accommodated in the first threading area 114 is different from a quantity of conductor layers 127 accommodated in the second threading area 115.

According to the stator 100 in this application, at least a part of the stator slots 111 accommodates conductor layers 127 of coils 121 of different phases, and quantities of conductor layers 127 of different phases are different in this part of the stator slots 111, so that an asymmetric short-pitch arrangement is formed in the stator slot 111, to effectively suppress the 5^{th} and 7^{th} harmonics of the air gap magnetic field. Therefore, torque fluctuations of the motor are suppressed, so that power outputs of the motor are more stable.

Referring to FIG. 1, the stator 100 according to this application may be used in an 8-pole 72-slot motor. Therefore, as shown in FIG. 2, a single pole of the stator 100 includes three groups of stator slots 117 (117A, 117B, and 117C), and a quantity of stator slots 111 in each group of stator slots 117 is 3 (in other words, a quantity of slots per pole per phase of the motor is q=3). In a single group of stator slots 117, the stator slots 111 include two first-type stator slots 112 and one second-type stator slot 113. It may be understood from FIG. 2 that a first threading area 114 and a second threading area 115 are formed in the first-type stator slot 112, and a third threading area 116 is formed in the second-type stator slot 113. Conductor layers 127 of different phases in the first-type stator slot 112 are separately located in the first threading area 114 and the second threading area 115, and a plurality of conductor layers 127 in the second-type stator slot 113 are all disposed in the third threading area 116.

Each group of stator slots 117 are divided into areas, so that three phase coils 121 form an asymmetric short-pitch arrangement in the stator slot 111, to suppress torque fluctuations of the motor. Optionally, a quantity of conductor layers 127 accommodated in a single stator slot 111 is m>4, and a quantity of slots per pole per phase of the stator 100 is q>2. For example, the stator 100 in this embodiment may be used in a three-phase motor in which the quantity q of slots per pole per phase of the stator is 3, and specifically, may be used in an 8-pole 72-slot three-phase motor, a 4-pole 36-slot three-phase motor, a 6-pole 54-slot three-phase motor, a 10-pole 90-slot three-phase motor, or the like.

Specifically, for how to arrange the winding 120 to form a short-pitch motor, refer to the following content.

In detail, a winding 120 of the three-phase motor in which the quantity q of slots per pole per phase of the stator is 3 is taken as an example. The winding 120 includes three phase coils 121: a phase-A coil, a phase-B coil, and a phase-C coil. In other words, the conductor layer 127 includes a phase A, a phase B, and a phase C.

As shown in FIG. 1, FIG. 2, FIG. 3, and Table 1, the quantity of conductor layers 127 accommodated in the single stator slot 111 of the stator 100 is m=5. An arrangement of the winding 120 per pole in the circumferential direction X is BBAAA, BBBAA, BBBBB, CCBBB, CCCBB, CCCCC, AACCC, AAACC, and AAAAA.

**Table 1 Arrangement of a winding per pole of a stator in a circumferential direction X (m=5 and q=3)**

| First group of stator slots 117A | | | Second group of stator slots 117B | | | Third group of stator slots 117C | | |
|---|---|---|---|---|---|---|---|---|
| First-type stator slot 112 | First-type stator slot 112 | Second-type stator slot 113 | First-type stator slot 112 | First-type stator slot 112 | Second-type stator slot 113 | First-type stator slot 112 | First-type stator slot 112 | Second-type stator slot 113 |
| B | B | B | C | C | C | A | A | A |
| B | B | B | C | C | C | A | A | A |
| A | B | B | B | C | C | C | A | A |
| A | A | B | B | B | C | C | C | A |
| A | A | B | B | B | C | C | C | A |

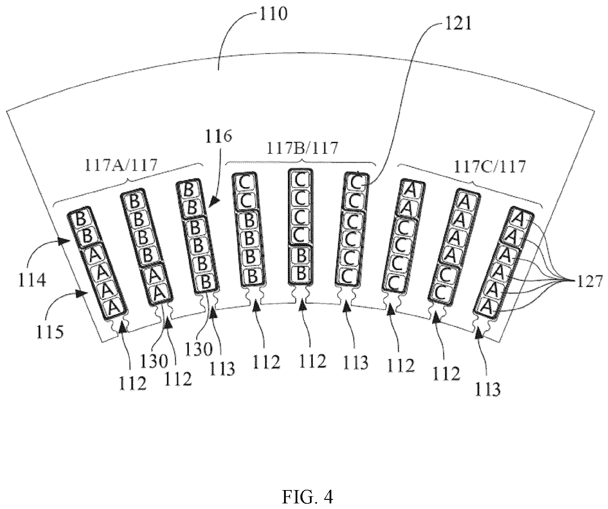

Optionally, as shown in FIG. 4 and Table 2, the quantity of conductor layers 127 accommodated in the single stator slot 111 of the stator 100 is m=6. An arrangement of the winding 120 per pole in the circumferential direction X is BBAAAA, BBBBAA, BBBBBB, CCBBBB, CCCCBB, CCCCCC, AACCCC, AAAACC, and AAAAAA.

**Table 2 Arrangement of a winding per pole of a stator in a circumferential direction X (m=6 and q=3)**

| First group of stator slots 117A | | | Second group of stator slots 117B | | | Third group of stator slots 117C | | |
|---|---|---|---|---|---|---|---|---|
| First-type stator slot 112 | First-type stator slot 112 | Second-type stator slot 113 | First-type stator slot 112 | First-type stator slot 112 | Second-type stator slot 113 | First-type stator slot 112 | First-type stator slot 112 | Second-type stator slot 113 |
| B | B | B | C | C | C | A | A | A |
| B | B | B | C | C | C | A | A | A |
| A | B | B | B | C | C | C | A | A |
| A | B | B | B | C | C | C | A | A |
| A | A | B | B | B | C | C | C | A |
| A | A | B | B | B | C | C | C | A |

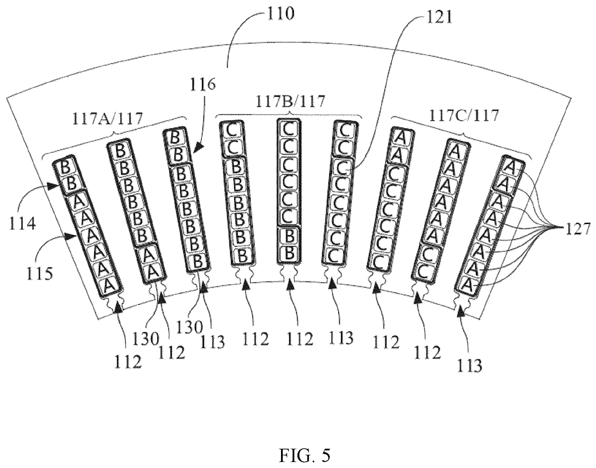

Optionally, as shown in FIG. 5 and Table 3, the quantity of conductor layers 127 accommodated in the single stator slot 111 of the stator 100 is m=8. An arrangement of the winding 120 per pole in the circumferential direction X is BBAAAAAA, BBBBBBAA, BBBBBBBB, CCBBBBBB, CCCCCCBB, CCCCCCCC, AACCCCCC, AAAAAACC, and AAAAAAAA.

**Table 3 Arrangement of a winding per pole of a stator in a circumferential direction X (m=8 and q=3)**

| First group of stator slots 117A | | | Second group of stator slots 117B | | | Third group of stator slots 117C | | |
|---|---|---|---|---|---|---|---|---|
| First-type stator slot 112 | First-type stator slot 112 | Second-type stator slot 113 | First-type stator slot 112 | First-type stator slot 112 | Second-type stator slot 113 | First-type stator slot 112 | First-type stator slot 112 | Second-type stator slot 113 |
| B | B | B | C | C | C | A | A | A |
| B | B | B | C | C | C | A | A | A |
| A | B | B | B | C | C | C | A | A |
| A | B | B | B | C | C | C | A | A |
| A | B | B | B | C | C | C | A | A |
| A | B | B | B | C | C | C | A | A |
| A | A | B | B | B | C | C | C | A |
| A | A | B | B | B | C | C | C | A |

Optionally, as shown in Table 4, the quantity of conductor layers 127 accommodated in the single stator slot 111 of the stator 100 is m=8. An arrangement of the winding 120 per pole in the circumferential direction X is BBBAAAAA, BBBBBAAA, BBBBBBBB, CCCBBBBB, CCCCCBBB, CCCCCCCC, AAACCCCC, AAAAACCC, and AAAAAAAA.

**Table 4 Arrangement of a winding per pole of a stator in a circumferential direction X (m=8 and q=3)**

| First group of stator slots 117A | | | Second group of stator slots 117B | | | Third group of stator slots 117C | | |
|---|---|---|---|---|---|---|---|---|
| First-type stator slot 112 | First-type stator slot 112 | Second-type stator slot 113 | First-type stator slot 112 | First-type stator slot 112 | Second-type stator slot 113 | First-type stator slot 112 | First-type stator slot 112 | Second-type stator slot 113 |
| B | B | B | C | C | C | A | A | A |
| B | B | B | C | C | C | A | A | A |
| B | B | B | C | C | C | A | A | A |
| A | B | B | B | C | C | C | A | A |
| A | B | B | B | C | C | C | A | A |
| A | A | B | B | B | C | C | C | A |
| A | A | B | B | B | C | C | C | A |
| A | A | B | B | B | C | C | C | A |

Optionally, as shown in Table 5, the quantity of conductor layers 127 accommodated in the single stator slot 111 of the stator 100 is m=7. An arrangement of the winding 120 per pole in the circumferential direction X is BBBAAAA, BBBBAAA, BBBBBBB, CCCBBBB, CCCCBBB, CCCCCCC, AAACCCC, AAAACCC, and AAAAAAA.

**Table 5 Arrangement of a winding per pole of a stator in a circumferential direction X (m=7 and q=3)**

| First group of stator slots 117A | | | Second group of stator slots 117B | | | Third group of stator slots 117C | | |
|---|---|---|---|---|---|---|---|---|
| First-type stator slot 112 | First-type stator slot 112 | Second-type stator slot 113 | First-type stator slot 112 | First-type stator slot 112 | Second-type stator slot 113 | First-type stator slot 112 | First-type stator slot 112 | Second-type stator slot 113 |
| B | B | B | C | C | C | A | A | A |
| B | B | B | C | C | C | A | A | A |
| B | B | B | C | C | C | A | A | A |
| A | B | B | B | C | C | C | A | A |
| A | A | B | B | B | C | C | C | A |
| A | A | B | B | B | C | C | C | A |
| A | A | B | B | B | C | C | C | A |

Optionally, in the circumferential direction X, a coil 121 of the second-type stator slot 113 is taken as a reference, and quantities of conductor layers 127 in stator slots 111 on two sides of the coil 121 that have a same phase as the coil 121 gradually decrease (as shown in a change in quantities of conductor layers 127 of the phase-B coils 121 in the first group of stator slots 117A and the second group of stator slot 117B in Table 5), to facilitate a winding arrangement of the winding 120.

Further, it may be understood from all the foregoing arrangement of the winding 120 that the third threading area 116 accommodates a plurality of conductor layers 127 of a same phase. In the circumferential direction X, the phase of the conductor layer 127 accommodated in the first threading area 114 of the first-type stator slot 112 is consistent with a phase of a conductor layer 127 in one of adjacent second-type stator slots 113. Similarly, the phase of the conductor layer 127 accommodated in the second threading area 115 of the first-type stator slot 112 is consistent with a phase of a conductor layer 127 in the other adjacent second-type stator slot 113. In other words, taking the arrangement of the winding in Table 5 as an example, the second-type stator slot 113 in the first group of stator slots 117A and the second-type stator slot 113 in the second group of stator slots 117B respectively accommodate a phase-B conductor layer 127 and a phase-C conductor layer 127. However, conductor layers 127 of different phases that are accommodated in the first-type stator slots 112 between the two second-type stator slots 113 are respectively a phase-B conductor layer 127 and a phase-C conductor layer 127 (in other words, a phase of the phase-B conductor layer 127 accommodated in the second-type stator slot 113 in the first group of stator slots 117A is consistent with a phase of a phase-B conductor layer 127 in the first-type stator slot 112 in the first group of stator slots 117A, and a phase of the phase-C conductor layer accommodated in the second-type stator slot 113 in the second group of stator slots 117B is consistent with a phase of a phase-C conductor layer 127 in the first-type stator slot 112 in the second group of stator slots 117B), so that conductor layers 127 of coils 121 of a same phase in the winding 120 are more concentrated, to facilitate an arrangement and winding.

In an alternative solution, an example in which a quantity of conductor layers 127 accommodated in a single stator slot 111 of a motor in which a quantity q of slots per pole per phase of the stator is 2 is m=3 is taken. Further, as shown in Table 6, the quantity m of conductor layers 127 accommodated in the single stator slot 111 of the motor 100 may be 3, and the quantity q of slots per pole per phase of the stator 100 is 2.

**Table 6 Arrangement of a winding per pole of a stator in a circumferential direction X (m=3 and q=2)**

| First group of stator slots 117A | | Second group of stator slots 117B | | Third group of stator slots 117C | |
|---|---|---|---|---|---|
| First-type stator slot 112 | Second-type stator slot 113 | First-type stator slot 112 | Second-type stator slot 113 | First-type stator slot 112 | Second-type stator slot 113 |
| B | B | C | C | A | A |
| A | B | B | C | C | A |
| A | B | B | C | C | A |

In an alternative solution, the stator provided in this embodiment may be further used in a motor in which the quantity q of slots per pole per phase is greater than 3. As shown in Table 7, if the quantity q of slots per pole per phase of the stator is set to 4, and the quantity of conductor layers accommodated in the single stator slot 111 of the motor is m=8, an arrangement of the winding per pole in the circumferential direction is BBAAAAAA, BBBBAAAA, BBBBBBAA, BBBBBBBB, CCBBBBBB, CCCCBBBB, CCCCCCBB, CCCCCCCC, AACCCCCC, AAAACCCC, AAAAAACC, and AAAAAAAA.

**Table 7 Arrangement of a winding per pole of a stator in a circumferential direction X (m=8 and q=4)**

| First group of stator slots 117A | | | | Second group of stator slots 117B | | | | Third group of stator slots 117C | | | |
|---|---|---|---|---|---|---|---|---|---|---|---|
| First-type stator slot 112 | First-type stator slot 112 | First-type stator slot 112 | Second-type stator slot 113 | First-type stator slot 112 | First-type stator slot 112 | First-type stator slot 112 | Second-type stator slot 113 | First-type stator slot 112 | First-type stator slot 112 | First-type stator slot 112 | Second-type stator slot 113 |
| B | B | B | B | C | C | C | C | A | A | A | A |
| B | B | B | B | C | C | C | C | A | A | A | A |
| A | B | B | B | B | C | C | C | C | A | A | A |
| A | B | B | B | B | C | C | C | C | A | A | A |
| A | A | B | B | B | B | C | C | C | C | A | A |
| A | A | B | B | B | B | C | C | C | C | A | A |
| A | A | A | B | B | B | B | C | C | C | C | A |
| A | A | A | B | B | B | B | C | C | C | C | A |

It should be noted that, in the stator according to this implementation of this application, the stator slot 111 includes a maximum of only two threading areas. To be specific, a part of the stator slots 111 includes the first threading area 114 and the second threading area 115, and a part of the stator slots 111 includes only the third threading area 116, to facilitate a winding arrangement of each phase coil 121.

All the foregoing arrangements of the winding 120 may be used as implementations in which an asymmetric short-pitch motor is formed. However, the technical solutions of this application are not limited to the foregoing implementations.

The following describes how to mount a conductor of the coil 121 in the stator slot 111.

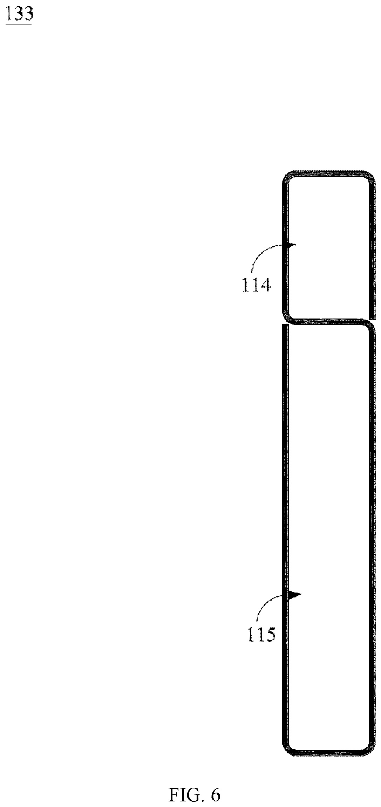

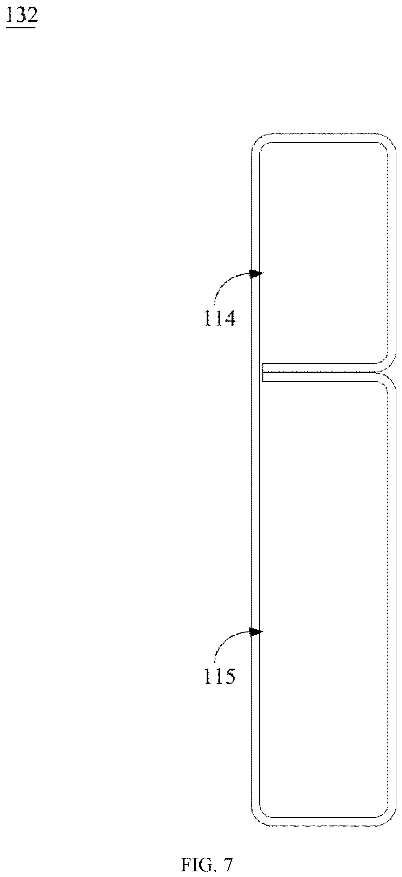

In a preferred solution, an insulation paper may be disposed in the stator slot 111, to separately space conductor layers of a same phase apart from an inner wall of the stator slot 111 and a conductor layer of another phase in an insulated manner. Because a voltage between the conductor layers of the same phase is small, to reduce a proportion of space occupied by an insulation structure in the stator slot 111, an insulation paper without separation (namely, the following second insulation paper 131) may be used. Referring to FIG. 2, the first-type stator slot 112 is provided with a first insulation paper 130, and the first insulation paper 130 defines the first threading area 114 and the second threading area 115 in the first-type stator slot 112, so that conductors of coils 121 of different phases disposed in the first-type stator slot 112 are insulated from each other. As shown in FIG. 6 and FIG. 7, optionally, the first insulation paper 130 may be a B-type insulation paper 132 or an S-type insulation paper 133.

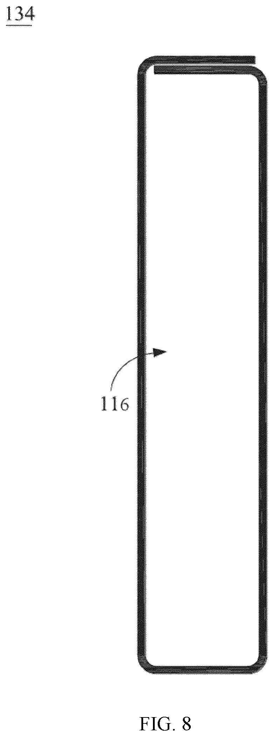

Referring to FIG. 2, the second-type stator slot 113 is configured to accommodate conductors of coils 121 of a same phase. Therefore, the second insulation paper 131 may be disposed in the second-type stator slot 113, and the second insulation paper 131 defines the third threading area 116 in the second-type stator slot 113, so that the conductors of the coils 121 of the same phase in the second-type stator slot 113 are insulated from the inner wall of the stator slot 111. As shown in FIG. 8, optionally, the second insulation paper 131 may be an O-type insulation paper 134. In this case, the structure is simple, and a small quantity of slots are occupied. In addition, the O-type insulation paper may further completely wrap conductors of a same phase, which are completely spaced apart from the inner wall of the stator slot 111, thereby achieving a good insulation effect.

Specifically, in an actual manufacturing process of the stator, the first insulation paper 130 may be first inserted into first-type stator slots 112 in a plurality of slot groups 117 by using a paper insertion device, first insulation papers 130 in different directions are then inserted into the first-type stator slots 112 in the plurality of slot groups 117 by using another paper insertion device, and the second insulation paper 131 may be inserted into second-type stator slots 113 in the plurality of slot groups 117 by using still another paper insertion device.

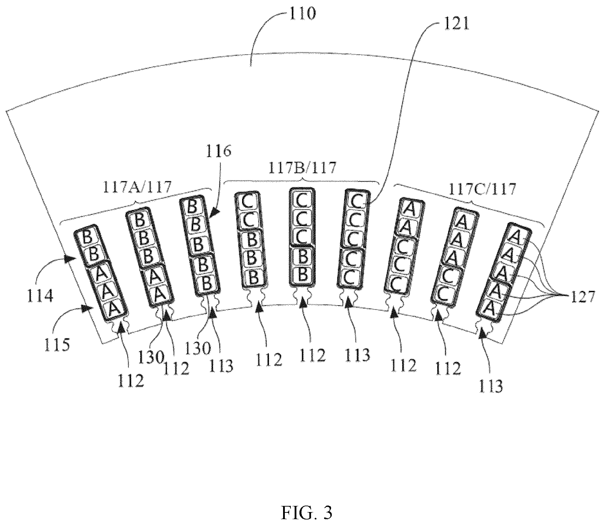

Certainly, referring to FIG. 3 to FIG. 5, the first insulation paper 130 may also be disposed in the second-type stator slot 113. The first insulation paper 130 defines the third threading area 116 in the second-type stator slot 113. In such an implementation, the third threading area 116 includes the first threading area 114 and the second threading area 115, and the first threading area 114 and the second threading area 115 accommodate conductors of coils 121 of a same phase. In this case, performance of the motor is not affected. In addition, using insulation papers of a same structure may simplify a mounting process between an insulation paper and the core 110, and improve mounting efficiency of the stator 100.

Specifically, in an actual manufacturing process of the stator, the first insulation paper 130 may be first inserted into first-type stator slots 112 in a plurality of slot groups 117 by using a paper insertion device, first insulation papers 130 in different directions are then inserted into the first-type stator slots 112 in the plurality of slot groups 117 by using another paper insertion device, and a corresponding first insulation paper 130 is finally inserted into second-type stator slots 113 in the plurality of slot groups 117 by using the previous paper insertion device (in other words, the paper insertion device used when the first insulation paper 130 is inserted into the first-type stator slot 112). In this way, used paper insertion devices are reduced, a positioning mechanism between the stator and the paper insertion device is prevented from being mounted a plurality of times, a mounting process between the insulation paper and the core 110 can be simplified, and mounting efficiency of the stator 100 can be improved.

In an alternative solution, no insulation paper may be disposed. Instead, a separate insulation structure (for example, an insulation sleeve) is disposed outside each conductor layer. Compared with a case in which the insulation paper is disposed, in this solution, more insulation materials are used, but insulation effect is better.

This application further provides a motor. The motor includes the stator 100 according to the foregoing implementations. The motor according to this application has small torque fluctuations and stable power outputs.

This application further provides a vehicle. The vehicle includes the foregoing motor, and has stable power outputs.

Unless otherwise defined, the technical and scientific terms used in this specification have the same meaning as those usually understood by a person skilled in the art in this application. The terms used in this specification are merely intended to describe specific implementation purposes, and are not intended to limit this application. Terms such as "disposing" existing in this specification may indicate that one component is directly attached to another component, or may indicate that one component is attached to another component by using a middleware. A feature described in one implementation in this specification may be applied to another implementation alone or in combination with another feature, unless the feature is inapplicable or otherwise described in the another implementation.

This application is described in the foregoing implementations. However, it will be understood that the foregoing implementations are merely used for example and description purposes, and are not intended to limit this application to the scope of the described implementations. A person skilled in the art may understand that more variations and modifications may be made according to the teachings of this application, and the variations and modifications fall within the protection scope of this application.

## Claims

1. A stator (100), comprising:
a core (110), wherein the core (110) is provided with a plurality of stator slots (111) spaced apart in a circumferential direction; and
a winding (120), wherein the winding (120) comprises at least two phase coils (121), each phase coil (121) is wound around the core (110) through the stator slot (111), and each phase coil (121) defines a plurality of conductor layers (127) in the stator slot (111), wherein
the plurality of stator slots (111) comprise a plurality of first-type stator slots (112), the first-type stator slot (112) comprises a first threading area (114) and a second threading area (115), the first threading area (114) accommodates a plurality of conductor layers (127) of a same phase, the second threading area accommodates a plurality of conductor layers (127) of a same phase, the phase of the conductor layer (127) accommodated in the first threading area (114) is different from the phase of the conductor layer (127) accommodated in the second threading area (115), and a quantity of conductor layers (127) accommodated in the first threading area (114) is different from a quantity of conductor layers (127) accommodated in the second threading area (115).

2. The stator (100) according to claim 1, wherein a quantity of conductor layers (127) accommodated in a single stator slot (111) is m≥3, and a quantity of slots per pole per phase of the stator (100) is q≥2.

3. The stator (100) according to claim 1, wherein a quantity of conductor layers (127) accommodated in a single stator slot (111) is m>4, and a quantity of slots per pole per phase of the stator (100) is q>2.

4. The stator (100) according to any one of claims 1 to 3, wherein the plurality of stator slots (111) further comprise a plurality of second-type stator slots (113); and
a third threading area (116) is formed in the second-type stator slot (113), a plurality of conductor layers (127) in the second-type stator slot (113) are all disposed in the third threading area (116), phases of the plurality of conductor layers (127) in the second-type stator slot (113) are consistent, and a plurality of first-type stator slots (112) are disposed between adjacent second-type stator slots (113) in the circumferential direction.

5. The stator (100) according to claim 4, wherein the phase of the conductor layer (127) accommodated in the first threading area (114) of the first-type stator slot (112) is consistent with a phase of a conductor layer (127) in one of the adjacent second-type stator slots (113); and
the phase of the conductor layer (127) accommodated in the second threading area (115) of the first-type stator slot (112) is consistent with a phase of the conductor layer (127) in the other adjacent second-type stator slot (113).

6. The stator (100) according to claim 5, wherein the quantity m of conductor layers (127) accommodated in the single stator slot (111) is one of 5, 6, 7, and 8, and the quantity of slots per pole per phase of the stator (100) is q=3.

7. The stator (100) according to claim 6, wherein the quantity m of conductor layers (127) accommodated in the single stator slot (111) is 5, the winding (120) comprises a phase-A coil, a phase-B coil, and a phase-C coil, and an arrangement of the winding (120) per pole in the circumferential direction is BBAAA, BBBAA, BBBBB, CCBBB, CCCBB, CCCCC, AACCC, AAACC, and AAAAA.

8. The stator (100) according to claim 6, wherein the quantity m of conductor layers (127) accommodated in the single stator slot (111) is 6, the winding (120) comprises a phase-A coil, a phase-B coil, and a phase-C coil, and an arrangement of the winding (120) per pole in the circumferential direction is BBAAAA, BBBBAA, BBBBBB, CCBBBB, CCCCBB, CCCCCC, AACCCC, AAAACC, and AAAAAA.

9. The stator (100) according to claim 6, wherein the quantity m of conductor layers (127) accommodated in the single stator slot (111) is 8, the winding (120) comprises a phase-A coil, a phase-B coil, and a phase-C coil, and an arrangement of the winding (120) per pole in the circumferential direction is BBAAAAAA, BBBBBBAA, BBBBBBBB, CCBBBBBB, CCCCCCBB, CCCCCCCC, AACCCCCC, AAAAAACC, and AAAAAAAA.

10. The stator (100) according to claim 6, wherein the quantity m of conductor layers (127) accommodated in the single stator slot (111) is 8, the winding (120) comprises a phase-A coil, a phase-B coil, and a phase-C coil, and an arrangement of the winding (120) per pole in the circumferential direction is BBBAAAAA, BBBBBAAA, BBBBBBBB, CCCBBBBB, CCCCCBBB, CCCCCCCC, AAACCCCC, AAAAACCC, and AAAAAAAA.

11. The stator (100) according to any one of claims 4 to 10, wherein the first-type stator slot (112) is provided with a first insulation paper (130), and the first insulation paper (130) defines the first threading area (114) and the second threading area (115) in the first-type stator slot (112).

12. The stator (100) according to claim 11, wherein the first insulation paper (130) is a B-type insulation paper or an S-type insulation paper.

13. The stator (100) according to claim 11, wherein the second-type stator slot (113) is also provided with the first insulation paper (130), the first insulation paper (130) defines the third threading area (116) in the second-type stator slot (113), and the third threading area (116) comprises the first threading area (114) and the second threading area (115).

14. The stator (100) according to any one of claims 4 to 10, wherein the second-type stator slot (113) is provided with a second insulation paper (131), and the second insulation paper (131) defines the third threading area (116) in the second-type stator slot (113).

15. The stator (100) according to claim 14, wherein the second insulation paper (131) is an O-type insulation paper.

16. A motor, comprising the stator (100) according to any one of claims 1 to 15.

17. A vehicle, comprising the motor according to claim 16.
